# EUROPÄISCHE PATENTANMELDUNG

(11) **EP 3 222 779 A1**
(43) Veröffentlichungstag der Anmeldung: **27.09.2017**
(21) Anmeldenummer: 16161735.2
(22) Anmeldetag: 22.03.2016
(51) Int. Cl.: D21H 17/28, C08B 30/00, D21H 19/54, D21H 17/29

(54) **BESCHICHTUNGSMASSE AUF STÄRKEBASIS**

(71) Anmelder: Jäckering Mühlen- und Nährmittelwerke GmbH, 59007 Hamm (DE)
(72) Erfinder: Roick, Thomas, 59007 Hamm (DE)
(74) Vertreter: Taruttis, Stefan Georg

(57) **Zusammenfassung**

Die Erfindung betrifft eine Beschichtungsmasse mit einem Gehalt an Stärke, die insbesondere eine Beschichtungsmasse auf Stärkebasis bildet, die insbesondere als Beschichtungsmasse für Papier oder als Zusatz zu Papiermasse Verwendung findet. Die Beschichtungsmasse zeichnet sich durch einen Gehalt an Arabinoxylankomplexen aus, der zur Verringerung der Viskosität einer wässrigen Suspension der Stärke führt, so dass die Stärke einen geringeren Hydrolysegrad bzw. ein höheres Molekulargewicht aufweisen kann als in ansonsten gleichen Zusammensetzungen, die dieselbe Viskosität aufweisen.

## Beschreibung

### Beschichtungsmasse auf Stärkebasis

Die vorliegende Erfindung betrifft Beschichtungsmassen auf Stärkebasis, deren Viskosität nicht allein durch den Hydrolysegrad der Stärke eingestellt ist.

Die Beschichtungsmasse, insbesondere in wässriger Zusammensetzung, kann z.B. eine Leimflotte zur Oberflächenleimung von Papier und weiteren cellulosehaltigen Werkstoffen, eine Streichmasse und/oder eine Überzugsmasse, insbesondere für Papier und weitere cellulosehaltige Werkstoffe sein, optional mit weiteren Inhaltsstoffen, z.B. ausgewählt aus Farbstoffen, die insbesondere Pigmente sein können, und/oder Füllstoffen. Des Weiteren betrifft die Erfindung ein Verfahren zur Herstellung von Papier und weiteren lignocellulosischen Werkstoffen mit dem Schritt des Auftragens der Beschichtungsmasse darauf und/oder Einmischens der Beschichtungsmasse in eine Papiermasse bzw. lignocellulosische Werkstoffmasse.

### Stand der Technik

Die US 5399193 A beschreibt neben stärkehaltigen Beschichtungsmassen für Papier, bei denen die als Bindemittel dienende Stärke zur Erniedrigung der Viskosität enzymatisch, durch Säure oder thermisch-chemische Behandlung teilweise hydrolysiert ist, kationische Stärke, die z.B. eine tertiäre oder quartäre Aminogruppe trägt in Mischung mit hydroxyalkylmodifizierter Stärke.

Die EP 0737777 B1 beschreibt eine Leimflotte für das Oberflächenleimen von Papier, die sich durch degradierte Amylopektin-Kartoffelstärke auszeichnet.

Die bekannten stärkehaltigen Leimflotten zur Oberflächenleimung von Papier sind dadurch nachteilig, dass sie eine aufwändige chemische Modifizierung der Stärke erfordern und/oder die teilweise Hydrolyse der Stärke, die für eine für den Auftrag auf das Papier geeignete niedrige Viskosität erforderlich ist, aufwändig ist, insbesondere den Zusatz von alpha-Amylase erfordert, und die Festigkeit der getrockneten Leimflotte mindert.

Die EP 2270237 A2 beschreibt die Herstellung von Arabinoxylan, das als wasserlösliches Ballaststoffkonzentrat eingesetzt wird.

Die WO 2006/066724 A1 beschreibt die Herstellung von Hemicellulose aus lignocellulosischem Material, insbesondere Haferspelzen, durch alkalische Extraktion und anschließende Fällung aus dem alkalischen Extrakt durch Zugabe eines mit Wasser mischbaren Alkohols.

Saake et al., "Isolation and Characterization of arabinoxylan from oat spelts", ACS Symposium Series: Hemicelluloses: Science and Technology, Vol. 864, 52-65 (2004) beschreibt die Herstellung von Arabinoxylan aus Haferspelzen durch alkalische Extraktion in wässrigem 5 Gew.-% Natriumhydroxid für 60 min bei 90°C, anschließende Zugabe von Essigsäure zu der von unlöslichen Bestandteilen abgetrennten Lösung bis pH 5,5 und anschließende Fällung des Xylans durch Zugabe eines dreifachen Volumens Ethanol.

### Aufgabe der Erfindung

Der Erfindung stellt sich die Aufgabe, eine alternative Beschichtungsmasse auf Stärkebasis bereitzustellen, bei der die Stärke in geringerem Ausmaß hydrolysiert ist, bzw. bei der die Stärke eine höhere Kettenlänge bzw. ein höheres mittleres Molekulargewicht aufweist und dennoch eine für den maschinellen Auftrag geeignete niedrige Viskosität.

### Beschreibung der Erfindung

Die Erfindung löst die Aufgabe mit den Merkmalen der Ansprüche, insbesondere durch Bereitstellen einer Beschichtungsmasse mit einem Gehalt an Stärke, die insbesondere eine Beschichtungsmasse auf Stärkebasis bildet, die insbesondere als Beschichtungsmasse für Papier oder als Zusatz zu Papiermasse Verwendung findet. Die Beschichtungsmasse zeichnet sich durch einen Gehalt an Arabinoxylankomplexen aus. Der Gehalt an Arabinoxylankomplexen führt zur Verringerung der Viskosität einer wässrigen Suspension der Stärke, so dass die Stärke einen geringeren Hydrolysegrad bzw. ein höheres Molekulargewicht aufweisen kann als in ansonsten gleichen Zusammensetzungen, die dieselbe Viskosität aufweisen.

Der Arabinoxylankomplex ist z.B. nach dem Verfahren erhältlich, das in der EP 2270237 A2 beschrieben ist, wobei als Ausgangsstoff zur Herstellung des Arabinoxylankomplexes lignocellulosisches Material, z.B. Getreidespelzen, und Mehl, bevorzugt Weizenmehl eingesetzt wird. Als Arabinoxylankomplex wird vorliegend Arabinoxylan und/oder Arabinogalactan bezeichnet, das jeweils nicht chemisch modifiziert ist. Der Arabinoxylankomplex ist wasserlöslich bzw. mit Wasser homogen mischbar.

Als Arabinoxylan wird vorliegend die Hemicellulose bezeichnet, die ein Copolymer aus Arabinose und Xylose umfasst oder daraus besteht, insbesondere 1,4-gebundene Xylose-Einheiten, die zumindest teilweise mit Arabinose-Einheiten substituiert sind, insbesondere mit Arabinose-Einheiten, die am C2, C3 oder C2 und C3 der Xylose-Einheiten gebunden sind. Als Arabinogalactan wird vorliegend das stark verzweigte Polysaccharid bezeichnet, das an einer Galactan-Hauptkette Seitenketten aus Galactose und Arabinose aufweist oder daraus besteht. Bevorzugt weist der Arabinoxylankomplex Arabinoxylan mit einem mittleren Molekulargewicht von ca. 120 000 bis 160 000, bevorzugt 140 000 und/oder 100 bis 140 Zuckereinheiten, die Xylose und Arabinose sind, auf oder besteht daraus.

Der Arabinoxylankomplex kann so in der Beschichtungsmasse enthalten sein, wie er aus pflanzlichem Material isoliert wurde, z.B. aus Mehl oder Getreidespelzen, so dass der Arabinoxylankomplex keine durch chemische Modifikation eingeführten Substitutionsgruppen aufweist.

Optional kann der Arabinoxylankomplex, insbesondere das Arabinoxylan, kationisch modifiziert sein, z.B. mit kationischen Gruppen substituiert sein. Bevorzugt sind die kationischen Substituenten Hydroxypropyltrimethylammonium- (HPMA)Substituenten oder Dialkylaminoethyl(DAE)-Substituenten. Generell ist bevorzugt, dass der durchschnittliche Substitutionsgrad 0,01 bis 1, bevorzugt 0,03 bis 0,3, bevorzugter 0,04 bis 0,1 beträgt, insbesondere bei Substitution mit kationischen Gruppen.

Die stärkehaltige Zusammensetzung, die gelatiniert ist, weist durch den Gehalt an Arabinoxylankomplex nicht nur eine verringerte dynamische Viskosität auf, sondern auch eine geringere Abhängigkeit der dynamischen Viskosität vom Schergefälle (1/s), jeweils im Vergleich mit einer bis auf den Gehalt an Arabinoxylankomplex identischen wässrigen gelatinierten Stärkezusammensetzung. Die geringere Abhängigkeit der dynamischen Viskosität vom Schergefälle erlaubt eine einfachere Steuerung bzw. einfachere Betriebsweise einer zum Auftrag der Zusammensetzung verwendeten Maschine. Bevorzugt ist ein Zusatz von 0,1 bis 5 Gew.-%, bevorzugter 1 bis 3 Gew.-% Arabinoxylankomplex, bezogen auf den Stärkeanteil der Zusammensetzung. So führt ein Zusatz von Arabinoxylankomplex zu einer gelatinierten wässrigen Lösung von Weizenstärke, die nativ oder optional teilweise hydrolysiert sein kann, zu einer Minderung der dynamischen Viskosität um einen Faktor von z.B. ca. 100 bis 1000, was z.B. eine signifikante Erhöhung der Eindringtiefe der Stärke in Papier und weitere lignocellulosische Werkstoffe, insbesondere in gestrichene Papiere erlaubt.

Beim erfindungsgemäßen Verfahren zur Herstellung von Papier bzw. eines lignocellulosischen Werkstoffs wird eine erfindungsgemäße stärkehaltige Beschichtungsmasse, die gelatiniert ist und einen Gehalt an Arabinoxylan aufweist, mit der Masse kontaktiert, aus der das Papier oder der lignocellulosische Werkstoff hergestellt wird. Z.B. wird die wässrige stärkehaltige Beschichtungsmasse auf die nasse, entwässerte oder getrocknete Masse des Papiers bzw. des Werkstoffs aufgetragen, z.B. per Walzenauftrag. Alternativ oder zusätzlich kann die stärkehaltige Beschichtungsmasse, die gelatiniert ist und einen Gehalt an Arabinoxylan aufweist, der wässrigen Papiermasse bzw. Werkstoffmasse vor dem Abtrennen von Wasser zusetzt werden, z.B. dem Faserbrei. Entsprechend enthält das dadurch erhältliche Papier bzw. der Werkstoff die stärkehaltige Beschichtungsmasse, die den Arabinoxylankomplex aufweist.

Der Zusatz des Arabinoxylankomplexes zu einer gelatinierten wässrigen Stärkezusammensetzung bewirkt bevorzugt eine Minderung der dynamischen Viskosität, wobei eine deutliche Retrogradation beim Abkühlen der gelatinierten wässrigen Stärkezusammensetzung in wesentlich geringerem Ausmaß oder stark verzögert auftritt, als dies z.B. beim Abkühlen wässriger amylosehaltiger Stärke auftritt. Die Zusammensetzung hat den Vorteil, dass sie eine signifikant größere Eindringtiefe der Stärke erlaubt, insbesondere in gestrichene Papiere. Die Zusammensetzung kann dabei als Leimungsflotte z.B. 1 bis 50, bevorzugt 5 bis 30, bevorzugter 10 bis 20 Gew.-% Stärke in Wasser enthalten, z.B. bei einem Gehalt von, bezogen auf den Stärkegehalt, 0,1 bis 5 Gew.-% Arabinoxylan.

Des Weiteren betrifft die Erfindung die Verwendung von Arabinoxylankomplex als viskositätsverringernder Zusatz für stärkehaltige Zusammensetzungen, wobei bevorzugt deren Stärkeanteil gelatiniert ist.

Die Stärke kann native Stärke sein oder anteilig hydrolysierte Stärke, z.B. mit einem Hydrolysegrad, der signifikant geringer ist als bei stärkehaltigen gelatinierten wässrigen Zusammensetzungen, die den gleichen Gehalt an Stärke und die gleiche dynamische Viskosität aufweisen, jedoch keinen Arabinoxylankomplex. Die Molmassenverteilung der Stärke kann z.B. 2,6 x 10⁶ g/mol betragen, z.B. bestimmt mittels des Verfahrens GPC-MALLS (Gelpermeationschromatographie mit Mehrwinkel-Laser-Licht-Streuung).

Die Stärke kann z.B. Stärke aus Mais, Getreide, insbesondere aus Roggen, Weizen, Gerste, Reis, Stärke aus Kartoffeln, Tapioka, Maniok, Erbsen und Mischungen dieser sein, die optional hydrolysiert sind. Die Stärke kann z.B. auf ein mittleres Molekulargewicht aufweisen, das als Viskosität einer 11 Gew.-% Lösung in Wasser nach dem Gelatinieren bestimmt ist als Viskosität von 2000 bis 50 mPas bei einem Schergefälle von 5 bis 40 1/s, gemessen bei 64°C mittels eines Rotationsrheometers "Haake Rheostress RS100" mit Zylinder-Messeinrichtung (Z40DIN).

Der Hydrolysegrad der Stärke kann z.B. erreicht werden durch enzymatische Hydrolyse der nativen Stärke mit einer Konzentration der Amylase von ca. 0,1 bis 0,5 % der Amylasekonzentration, die erforderlich ist, um in einer gelatinierten wässrigen Stärkelösung gleicher Stärkekonzentration ohne Arabinoxylankomplex dieselbe dynamische Viskosität zu erhalten.

Bei der Herstellung der Zusammensetzung kann der Arabinoxylankomplex der Stärke vor der, bevorzugt nach der thermischen Behandlung zur Gelatinierung zugesetzt werden.

Der Arabinoxylankomplex kann aus Mehl, z.B. aus Weizenmehl oder aus Getreidespelzen isoliert sein, z.B. aus Haferspelzen, insbesondere nach dem Verfahren der WO 2006/066724 A1 zur Isolierung von Hemicellulose aus Haferspelzen. Ein aus Getreidespelzen isolierter Arabinoxylankomplex erniedrigt die Viskosität der gelatinierten Stärkelösung signifikant in Abhängigkeit vom Schergefälle. Daher hat der aus Getreidespelzen isolierte Arabinoxylankomplex den Vorteil einer höheren Viskosität bei niedrigem Schergefälle, z.B. zur Verwendung der Zusammensetzung als Bindemittel für Streichfarbe.

Die Erfindung wird nun genauer anhand von Beispielen mit Bezug auf die Figuren beschrieben, die in
- Fig. 1 eine rheologische Fließkurve gelatinierter hydrolysierter Stärke in Wasser,
- Fig. 2 eine rheologische Fließkurve gelatinierter hydrolysierter Stärke mit Arabinoxylankomplex in Wasser,
- Fig. 3 eine rheologische Fließkurve gelatinierter hydrolysierter Stärke mit kationisch modifiziertem Arabinoxylankomplex in Wasser und in
- Fig. 4 eine rheologische Fließkurve gelatinierter hydrolysierter Stärke mit Arabinoxylankomplex in Wasser zeigen.

Die Zusammensetzung kann nach herkömmlichen Verfahren auf ungeleimtes Papier aufgetragen werden, z.B. aufgesprüht oder aufgewalzt werden, mit anschließender Kalibrierung und Trocknung auf branchentypischen Trocknungspartien der papierverarbeitenden Industrie.

### Beispiel 1: Leimungsflotte mit Arabinoxylankomplex aus Haferspelzen

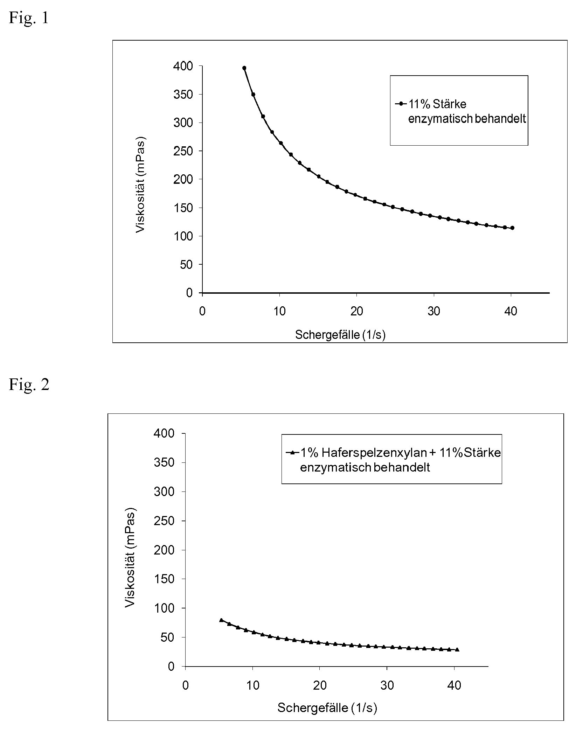

Als Vergleichslösung wurden 11 Gew.-% Weizenstärke, die mittels α-Amylase enzymatisch hydrolysiert war, in Wasser suspendiert und mittels Dampfinjektion gelatiniert. Die dynamische Viskosität dieser gelatinierten Vergleichslösung wurde im Rotationsbecherviskosimeter bei 64°C in Abhängigkeit vom Schergefälle bestimmt. Das Messergebnis ist in Fig. 1 dargestellt und zeigt eine Viskosität, die von ca. 400 mPas bei einem Schergefälle von ca. 5/s auf ca. 110 mPas bei einem Schergefälle von ca. 40/s abfällt.

Der gelatinierten Vergleichslösung wurde im Verhältnis zum Stärkegehalt 1 Gew.-% Arabinoxylankomplex, der aus Haferspelzen isoliert wurde, zugesetzt und bei 64°C mittels eines elektrischen Rührwerks darin homogenisiert. Die dynamische Viskosität wurde unter denselben Bedingungen wie bei der gelatinierten Vergleichslösung bestimmt. Das Messergebnis, in Fig. 2 dargestellt, zeigt, dass der Gehalt an Arabinoxylankomplex (Haferspelzenxylan) insgesamt die vom Schergefälle abhängige Lösungsviskosität signifikant erniedrigt, z.B. auf ca. 180 mPas bei 5/s und ca. 30 bei 40/s. Dabei wird auch die Abhängigkeit der Viskosität vom Schergefälle verringert, wie anhand des deutlich flacheren Verlaufs der Kurve sichtbar ist.

Dieser Arabinoxylankomplex wurde mit den folgenden Schritten aus Haferspelzen isoliert: Spelzen, die aus der mechanischen Entspelzung von Hafer gewonnen wurden, wurden gesichtet, z.B. mittels eines Windsichters, und mit einem Walzenstuhl behandelt, um deren Oberfläche aufzurauhen. Bevorzugt wurden diese Spelzen erneut gesichtet. Die Spelzen wurden mit einer 3 bis 5 % NaOH Lösung bei 90°C extrahiert, z.B. 10 Gew.-% Spelzen für 60 min. Anschließend wurde die Lösung von ungelösten Bestandteilen getrennt, z.B. mittels einer Filterpresse. Die so geklärte alkalische Lösung wurde direkt mit Alkohol versetzt, um Arabinoxylankomplexe auszufällen. Der Alkohol, z.B. Methanol, Ethanol und/oder Isopropanol, wurde bis zu einem Verhältnis zugesetzt, dass die Fällung im Alkalischen erfolgt, also ohne Neutralisation. Für Methanol sind dies ca. 60 Gew.-%. Der ausgefällte Niederschlag wurde aus der Mischung der alkalischen Lösung mit Alkohol abgetrennt, z.B. durch Filtration oder Zentrifugation, und ergab den Arabinoxylankomplex. Optional wurde der abgetrennte Arabinoxylankomplex gebleicht, z.B. mittels Wasserstoffperoxid, und/oder getrocknet.

### Beispiel 2: Leimungsflotte mit kationisch modifiziertem Arabinoxylankomplex aus Haferspelzen

Der Vergleichslösung von Beispiel 1 wurde im Verhältnis zum Stärkegehalt 1 Gew.-% eines kationisch modifizierten Arabinoxylankomplexes zugesetzt und durch Rühren mit elektrischen Rührwerken homogenisiert.

Der kationisch modifizierte Arabinoxylankomplex wurde durch Umsetzen des gemäß Beispiel 1 isolierten Arabinoxylankomplexes mit Glycidyltrimethylammoniumchlorid (CAS: 3033-77-0) in wässriger basischer Umgebung hergestellt, entsprechend wies der kationisch modifizierte Arabinoxylankomplex HPMA-Gruppen auf (mittlerer Substitutionsgrad ca. 0,5).

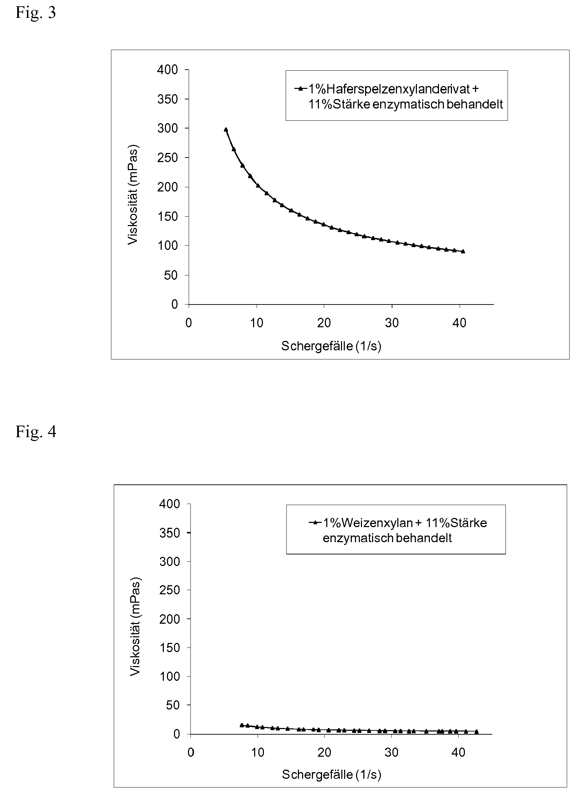

Die dynamische Viskosität der Lösung mit 11 Gew.-% gelatinierter Stärke, in die der kationisch modifizierte Arabinoxylankomplex eingemischt war, wurde unter denselben Bedingungen wie in Beispiel 1 bestimmt. Das Messergebnis ist in Fig. 3 gezeigt und macht deutlich, dass der Gehalt an kationisch modifiziertem Arabinoxylankomplex die vom Schergefälle abhängige Lösungsviskosität gegenüber der Vergleichslösung signifikant erniedrigt.

### Beispiel 3: Leimungsflotte mit Arabinoxylankomplex aus Weizenmehl

Der Arabinoxylankomplex wurde aus Weizenmehl mit dem folgenden Verfahren isoliert: Weizenmehl wurde in Wasser dispergiert, 3 bis 10 min ruhen gelassen, mit Wasser verdünnt und mittels eines Dekanters die leichteste wässrige Phase, Trockensubstanzgehalt (TS) ca. 6 bis 16%, abgetrennt, die den Arabinoxylankomplex enthält. Zur Abtrennung verbliebener Stärke und agglomerierbaren Proteins wird diese wässrige Phase erneut separiert, wobei die leichte Fraktion, TS ca. 6 bis 12 %, mit Dampf erwärmt und mit α-Amylase, optional mit Natriumbisulfit oder Kalimdisulfit versetzt und bei ca. 80 bis 90°C dextriniert, z.B. kontinuierlich in einem Jet-Kocher. Das erhaltene Hydrolysat wird zur Flokkulation von Protein und Lipid stehengelassen und anschließend von flokkulierten Bestandteilen mit einem Separator oder Dekanter separiert. Die erhaltene leichte Phase dieses Hydrolysats wird mit einem Jet-Kocher sterilisiert und mit Glucoamylase bei ca. 60°C verzuckert und gleichzeitig mit alkalischer und saurer Protease versetzt. Anschließend wird das verzuckerte und proteolysierte Hydrolysat mit einer Ultrafiltrationsmembran (Ausschlussgrenze von ca. 100 000 Da) aufkonzentriert und von löslichen Proteinen und Glucose getrennt. Das so erhaltene Retentat der Ultrafiltration kann in einem Verdampfer auf bevorzugt 40% TS aufkonzentriert werden. Das aufkonzentrierte Retentat wird mit Ethanol gemischt und darin feinst verteilt, z.B. mittels eines Rotor-Stator-Mischers. Der Arabinoxylankomplex fällt im Ethanol aus und kann durch eine Filterpresse isoliert werden, optional anschließend kann mit konzentriertem Ethanol gewaschen werden. Der ausgefällte Arabinoxylankomplex wird bevorzugt anschließend getrocknet und gemahlen, z.B. mittels eines Ultrarotorsystems mahlgetrocknet und ergibt den Arabinoxylankomplex, der bevorzugt ein mittleres Molekulargewicht von zumindest ca. 120 000 bis 160 000, bevorzugt 140 000 und/oder 100 bis 140 Zuckereinheiten, die Xylose und Arabinose sind, aufweist oder daraus besteht.

Der Arabinoxylankomplex enthielt zu ca. 80 Gew.-% der Trockenmasse Arabinoxylan.

Die Vergleichslösung von Beispiel 1 wurde im Verhältnis zum Stärkegehalt mit Arabinoxylankomplex auf 1 Gew.-% Arabinoxylan versetzt und bei 64°C homogenisiert. Die Viskosität wurde unter denselben Bedingungen wie in Beispiel 1 bestimmt. Das in Fig. 4 gezeigte Messergebnis macht deutlich, dass diese Zusammensetzung durch den Gehalt an Arabinoxylan aus Weizenmehl (Weizenxylan) eine drastisch verringerte dynamische Viskosität aufwies und dass überdies die Viskosität nur eine geringe bis keine Abhängigkeit vom anliegenden Schergefälle aufwies.

Die Beispiele zeigen, dass der Zusatz von Arabinoxylankomplex, insbesondere von Arabinoxylan, das z.B. aus Getreidespelzen oder Getreidemehl isoliert ist, insbesondere aus Weizenmehl, die dynamische Viskosität einer gelierten wässrigen Stärkelösung signifikant verringert und bevorzugt die Abhängigkeit der Viskosität vom Schergefälle signifikant verringert. Der beispielhaft verwendete Anteil von 1 Gew.-% Arabinoxylankomplex bzw. Arabinoxylan in Bezug auf den Stärkegehalt zeigt die niedrige Dosierung, die zur Erniedrigung der Viskosität der gelierten Stärke ausreicht.

## Patentansprüche

1. Beschichtungsmasse mit einem Gehalt an Stärke, **gekennzeichnet durch** einen Gehalt an Arabinoxylankomplex.

2. Beschichtungsmasse nach Anspruch 1, **dadurch gekennzeichnet, dass** der Arabinoxylankomplex Arabinoxylan aufweist.

3. Beschichtungsmasse nach einem der voranstehenden Ansprüche, **dadurch gekennzeichnet, dass** sie in Wasser vorliegt und die Stärke gelatiniert ist.

4. Beschichtungsmasse nach einem der voranstehenden Ansprüche, **dadurch gekennzeichnet, dass** der Arabinoxylankomplex Arabinoxylan mit einem mittleren Molekulargewicht von ca. 120 000 bis 160 000, bevorzugt 140 000 und/oder 100 bis 140 Zuckereinheiten, die Xylose und Arabinose sind, aufweist oder daraus besteht.

5. Beschichtungsmasse nach einem der voranstehenden Ansprüche, **dadurch gekennzeichnet, dass** sie eine Leimflotte zur Leimung von Papier oder anderem lignocellulosischem Werkstoff ist, ein Trockenfestmittel für Papier oder anderen lignocellulosischen Werkstoff ist, ein Retentionsmittel für wasserunlösliche Füllstoffe für Papier oder anderen lignocellulosischen Werkstoff ist, oder Bindemittel für Streichfarbe ist.

6. Beschichtungsmasse nach einem der voranstehenden Ansprüche, **dadurch gekennzeichnet, dass** das Arabinoxylan mit kationischen Gruppen substituiert ist.

7. Beschichtungsmasse nach einem der voranstehenden Ansprüche, **dadurch gekennzeichnet, dass** sie in Bezug auf den Gehalt an Stärke 0,01 bis 5 Gew.-% Arabinoxylan enthält.

8. Beschichtungsmasse nach einem der voranstehenden Ansprüche, **dadurch gekennzeichnet, dass** die Stärke ein mittleres Molekulargewicht von >10⁷ Da aufweist und die Zusammensetzung im gelatinierten Zustand der Stärke in Wasser eine dynamische Viskosität aufweist, die bei einer Temperatur von 64 °C über ein Schergefälle von 5/s bis 40/s um maximal 220 mPas, bevorzugt um maximal 50 mPas abweicht.

9. Beschichtungsmasse nach einem der voranstehenden Ansprüche, **dadurch gekennzeichnet, dass** die Stärke enzymatisch, durch Säure, durch Oxidation, thermisch und/oder thermo-chemisch hydrolysiert ist.

10. Beschichtungsmasse nach einem der voranstehenden Ansprüche, **dadurch gekennzeichnet, dass** der Arabinoxylankomplex aus Getreidemehl oder aus Getreidespelzen isoliert ist.

11. Beschichtungsmasse einem der voranstehenden Ansprüche, **dadurch gekennzeichnet, dass** das Arabinoxylan keine durch chemische Modifikation eingeführten Substitutionsgruppen aufweist.

12. Papier oder lignocellulosischer Werkstoff, **gekennzeichnet durch** einen Gehalt einer Beschichtungsmasse nach einem der voranstehenden Ansprüche.

13. Verfahren zur Herstellung von Papier oder lignocellulosischem Werkstoff, **gekennzeichnet durch** Kontaktieren von wasserhaltiger und/oder getrockneter Masse für Papier oder lignocellulosischen Werkstoff mit einer Beschichtungsmasse einem der Ansprüche 1 bis 9, die in Wasser enthalten ist.

14. Verfahren nach Anspruch 13, **dadurch gekennzeichnet, dass** die Beschichtungsmasse durch Gelatinieren der Stärke in Wasser vor oder nach dem Zumischen des Arabinoxylankomplexes hergestellt wird.

15. Verfahren nach einem der Ansprüche 13 bis 14, **dadurch gekennzeichnet, dass** die Beschichtungsmasse wässrig ist und auf entwässerte oder getrocknete Masse von Papier oder lignocellulosischen Werkstoff aufgetragen und eingewalzt wird.
